# EUROPEAN PATENT APPLICATION

(11) **EP 4 848 599 A1**
(43) Date of publication of application: **02.12.2026**
(21) Application number: 25200154.0
(22) Date of filing: 04.09.2025
(51) Int. Cl.: H04B 1/7143, H04L 5/00

(54) **INTER-SLOT FREQUENCY HOPPING IN A SUB-BAND NON-OVERLAPPING FULL DUPLEX (SBFD) DEPLOYMENT**

(30) Priority: 28.05.2025 US 202563812943 P
(71) Applicant: Nokia Technologies Oy, 02610 Espoo (FI)
(72) Inventor: NHAN, Nhat-Quang, Reims (FR)
(74) Representative: Nokia EPO representatives

(57) **Abstract**

A method is provided that includes determining transmission occasions in at least a first slot and a subsequent, second slot for an uplink transmission toward a network. The transmission occasions have inter-slot frequency hopping enabled, and the inter-slot frequency hopping includes inter-slot frequency hopping across sub-band non-overlapping full duplex (SBFD) symbols in the first slot and non-SBFD symbols in the second slot. The method includes calculating a starting resource block (RB) for the transmission occasion during the first slot according to a first frequency hopping pattern, and the starting RB for the transmission occasion during the second slot according to a second frequency hopping pattern different from the first frequency hopping pattern. And the method includes transmitting the uplink transmission toward the network in the first slot and the second slot starting at the starting RB for each slot of the first slot and the second slot.

## Description

### TECHNOLOGICAL FIELD

The present disclosure relates generally to telecommunications and, in particular, to inter-slot frequency hopping in a sub-band non-overlapping full duplex (SBFD) deployment in a telecommunications system.

### BACKGROUND

Telecommunications systems can be seen as facilities that enable communications between two or more entities such as between two user equipment, between a user equipment and a base station, between two base stations, a user equipment and a network function of a communication network and/or a base station and other nodes. A telecommunications system can include a communication network and one or more user equipment. Communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a telecommunications system that includes a wireless communication network, at least a part of a communication session between at least two stations occurs over a wireless link. Examples of wireless communication networks comprise public land mobile networks (PLMN), satellite-based communication networks and different wireless local networks, for example wireless local area networks (WLAN). Some wireless communication networks can be divided into cells, and are therefore often referred to as cellular networks.

A user can access a communication network of the telecommunications system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by, for example, a base station of a cell, and transmit and/or receive communications on the carrier.

Telecommunications systems have evolved through multiple generations, each bringing advancements in speed, capacity, and functionality. The Evolved Packet System (EPS) represents the 4G architecture, which includes Long-Term Evolution (LTE) and LTE-Advanced (LTE-A) as its radio access technologies. The 5G System (5GS) builds upon EPS, introducing 5G New Radio (5G NR) for enhanced mobile broadband, massive machine-type communications, and ultra-reliable low-latency communications. The future 6G System (6GS) is expected to further revolutionize telecommunications with even more advanced capabilities. Telecommunications systems are interconnected, with 5GS designed to interwork with EPS for seamless service continuity. The 3rd Generation Partnership Project (3GPP) plays a crucial role in developing and maintaining standards for these telecommunications systems, ensuring global interoperability and evolution from Universal Mobile Telecommunications System (UMTS) (3G) through to the ongoing development of 6G technologies.

### BRIEF SUMMARY

Example implementations of the present disclosure are directed to telecommunications and, in particular, to inter-slot frequency hopping in a sub-band non-overlapping full duplex (SBFD) deployment in a telecommunications system. According to some aspects, the present disclosure includes the subject matter of the independent claims. Some further aspects are defined in the dependent claims.

The above-referenced aspects and other aspects, features, and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example implementation described herein. The present disclosure is intended to be read holistically such that any separable features or elements of the disclosure, in any of its aspects and example implementations, should be viewed as combinable unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope or spirit of the disclosure in any way. Other example implementations, aspects and advantages will become apparent from the following detailed description taken in conjunction with the accompanying figures which illustrate, by way of example, the principles of some described example implementations.

### BRIEF DESCRIPTION OF THE FIGURE(S)

Having thus described example implementations of the disclosure in general terms, reference will now be made to the accompanying figures, which are not necessarily drawn to scale, and wherein:
FIG. 1 illustrates a telecommunications system that includes one or more public land mobile networks (PLMNs) coupled to one or more external data networks, according to some example implementations of the present disclosure;
FIG. 2 illustrates a PLMN, according to some example implementations;
FIG. 3 illustrates sub-band non-overlapping full duplex (SBFD) and non-SBFD slots in a SBFD deployment;
FIGS. 4A and 4B illustrate example nominal and actual time domain window (TDW) determination for demodulation - reference signal (DM-RS) bundling;
FIG. 5 illustrates inter-slot frequency hopping (FH) when DM-RS bundling is enabled in time-division duplexing (TDD);
FIG. 6 illustrates inter-slot FH in SBFD symbols;
FIGS. 7 and 8 illustrate inter-slot FH across SBFD symbols and non-SBFD symbols in different slots, according to various example implementations;
FIGS. 9 and 10 are flowcharts illustrating various steps in a method of calculating a starting resource block (RB) for transmission occasions in which inter-slot FH is enabled, and the inter-slot FH includes inter-slot FH across SBFD symbols and non-SBFD symbols, according to various example implementations;
FIGS. 11 and 12 are flowcharts illustrating various steps in methods according to various example implementations; and
FIG. 13 illustrates an apparatus according to some example implementations.

### DETAILED DESCRIPTION

Some implementations of the present disclosure will now be described more fully hereinafter with reference to the accompanying figures, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. Like reference numerals refer to like elements throughout. Unless specified otherwise or clear from context, references to first, second or the like should not be construed to imply a particular order but are merely utilized to distinguish one item or operation from another.

As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form. Furthermore, it should be understood that unless otherwise specified, the terms "data," "content," "digital content," "information," and similar terms may be at times used interchangeably. The term "network" may refer to a group of interconnected computers including clients and servers; and within a network, these computers may be interconnected directly or indirectly by various means including via one or more switches, routers, gateways, access points or the like.

The present disclosure discusses telecommunication systems and mobile or cellular networks and user equipment thereof, and while specific terms may be used, are broadly applicable across various technologies. For instance, while the present disclosure may reference radio access technologies such as 5G NR and 5G Advanced, the present disclosure is equally relevant to next generation radio access technologies, such as 6G. Example implementations of the present disclosure described herein also mention public land mobile networks (PLMNs) and mobile network operators (MNOs), but example implementations are similarly applicable to standalone non-public networks (SNPNs).

Although some examples and figures focus on radio access networks (RANs) and in particular radio access networks that operate in accordance with the 3GPP standard for 5G NR (generally referred to as 3GPP access or 3GPP access networks), example implementations are applicable to any type of access networks. The applicability to any type of access network includes not only 3GPP access networks but also non-3GPP access networks, such as wireline access, untrusted non-3GPP access network, and trusted non-3GPP access network using wireless access gateway function (W-AGF), non-3GPP interworking function (N3IWF), or trusted non-3GPP gateway function (TNGF) to connect to a core network (e.g., a 5G core network (5GC) or a 6G core network (6GC)) of a mobile or cellular network.

Further, as used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); or (c) hardware circuit(s) and/or processor(s), such as a microprocessor(s) or a portion of a microprocessor(s), that requires software (e.g., firmware) for operation, but the software may not be present when it is not needed for operation.

The above definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

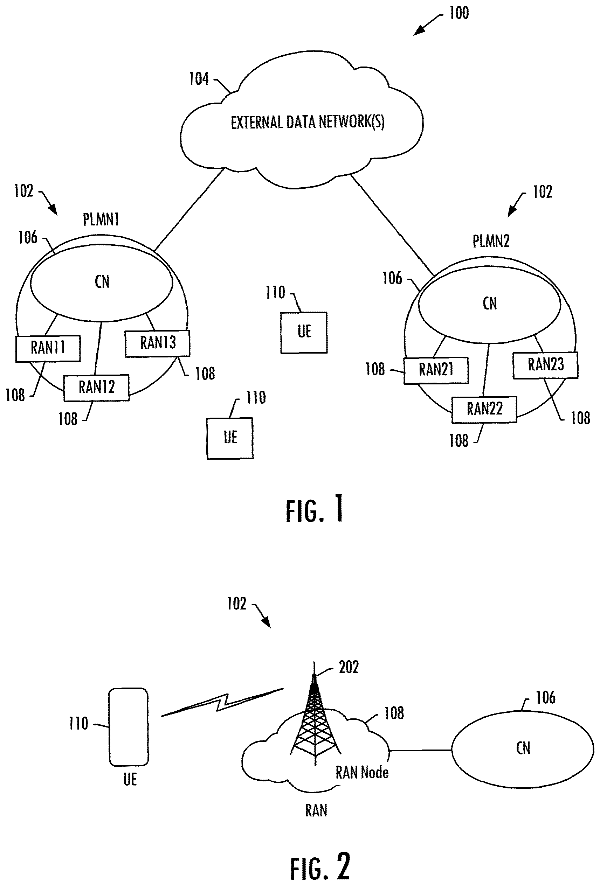

FIG. 1 illustrates a telecommunications system **100** according to various example implementations of the present disclosure. Examples of suitable telecommunications systems include UMTS, EPS and 5GS, as well as the future 6GS. The telecommunications system (otherwise referred to as a system) generally includes one or more mobile or cellular networks. The one or more mobile or cellular networks may interwork with each other. As shown, for example, the system includes one or more PLMNs **102** coupled to one or more other external data networks (DN) **104** - notably including a wide area network (WAN) such as the Internet. As will be appreciated, a PLMN may be a standalone PLMN that includes a 5GC, or may be a non-standalone PLMN that includes both an Evolved Packet Core (EPC) and a 5GC connected to a RAN. Although the system shown includes one or more PLMNs, it will be appreciated that the system may include one or more non-public networks, or one or more PLMNs and one or more non-public networks.

Each of the PLMNs **102** includes a core network (CN) **106,** such as the EPC, the 5GC, or a 6GC; and each CN is coupled to one or more RANs **108** that implement one or more radio access technologies (RATs). Examples of these RANs include the evolved UMTS terrestrial radio access network (E-UTRAN) of 4G LTE, the next generation (NG) radio access network (NG-RAN) of 5G NR, and the 6G RAN. As used herein, a "network device" refers to any suitable device of a RAN or a core network of a telecommunications system. Examples of suitable network devices are described in greater detail below.

Examples of RATs include 3GPP radio access technologies such as GSM, CDMA2000 1xEV-DO (HRPD), CDMA2000 1x (1xRTT), UTRA, E-UTRA, 5G NR, 5G Advanced, and 6G. Other examples of RATs include IEEE 802 technologies such as IEEE 802.11 (Wi-Fi), IEEE 802.15 (including 802.15.1 (WPAN/Bluetooth), 802.15.4 (Zigbee) and 802.15.6 (WBAN)), Bluetooth, Bluetooth Low Energy (BLE), ultra wideband (UWB), and the like. Generally, a RAT may refer to any 2G, 3G, 4G, 5G, 6G or higher generation RAT and their different versions, as well as to any other RAT that may be arranged to interwork with such a RAT to provide access to the CN **106** of a MNO.

The telecommunications system **100** also includes one or more communication devices that may be varyingly known as user equipment (UE) **110,** terminal device, terminal equipment, mobile station or the like. The UE is generally a device configured to communicate with a network device (e.g., an access node such as a RAN node of RAN **108**) or a further UE in the telecommunications system. The UE may be a portable computer (e.g., laptop, notebook, tablet computer), mobile phone (e.g., cell phone, smartphone), wearable computer (e.g., smartwatch), or the like. In other examples, the UE may be an Internet of things (IoT) device, an industrial IoT (IIoT device), a vehicle equipped with a vehicle-to-everything (V2X) communication technology, or the like. In some examples, as referenced by 3GPP, the UE may be a narrowband loT (NB-loT) device, an enhanced machine-type communication (eMTC) device, a reduced capability (RedCap) device, an ambient loT device, or the like.

In operation, these UEs **110** may connect to one or more RAN nodes of the RANs **108** according to their particular RATs to thereby access a particular CN **106** of a PLMN **102,** or to access one or more of the external data networks **104** (e.g., the Internet) or services provided by the PLMN. The external data network may provide Internet access, or 3rd party services (e.g., service provided by 3rd party applications servers). For example, the International Telecommunication Union (ITU) has classified 5G mobile network services (e.g., services provided by a 5G mobile network) into three categories: enhanced mobile broadband (eMBB), ultra-reliable and low-latency communications (URLLC), and massive machine type communications (mMTC) or massive internet of things (MloT).

In various examples, a RAN **108** may be configured to provide one or more macrocells, microcells, picocells, femtocells or the like. The RAN may generally include one or more RAN nodes that interact with UEs **110.** In various examples, a RAN node may be referred to as a base station (BS), access point (AP), base transceiver station (BTS). Examples of RAN nodes include a Node B (NB), evolved NB (eNB), macro BS, NB (MNB) or eNB (MeNB), home BS, NB (HNB) or eNB (HeNB), next generation NB (gNB), enhanced gNB (en-gNB), next generation eNB (ng-eNB), 6G NB (6gNB), or the like. The term 'gNB' in 5G NR may correspond to the eNB in 4G LTE. Also, a NG-RAN node may refer to a gNB or a ng-eNB. And unless otherwise specified, a gNB in 5G NR or a 6gNB in 6G may at times be more generally referred to as a (6)gNB or more simply a gNB.

The RAN **108** may include some type of network controlling/governing entity responsible for control of the RAN nodes. The network controlling/governing entity and RAN node may be separate entities or may be integrated into a single apparatus. The network controlling/governing entity may include processing circuity configured to carry out various management functions for controlling a RAN node or RAN nodes of the RAN. The processing circuity may be associated with a memory, computer-readable storage medium or a data storage device comprising a database for maintaining information required in the various management functions.

FIG. 2 illustrates an example of a PLMN **102,** such as 4G LTE, 5G NR or 6G PLMN that communicates with a UE **110** and an external data network **104** of the telecommunications system **100.** As shown, the RAN **108** (e.g., E-UTRAN, NG-RAN, 6G RAN) includes one or more RAN nodes **202** configured to connect one or more UEs to the RAN to thereby access the CN **106** (e.g., EPC, 5GC, 6GC). In 4G LTE, the UE, E-UTRAN and EPC compose the EPS. Similarly, in 5G NR, the UE, NG-RAN and 5GC compose the 5GS. And in 6G, the UE, 6G RAN and 6GC compose the 6GS.

In some implementations, operations of a gNB or other RAN node **202** may be distributed or functionally split into components including one or more remote radio head (RRHs) or radio units (RUs), and a baseband unit (BBU); and in some implementations, the BBU may be split into a central/centralized unit (CU) (central node) and a distributed unit (DU) (distributed node). The CU may be, for example, a server, host or node. In some implementations, the RRH/RU and DU may be collocated at a network device. It is also possible that operations of a gNB or RAN node may be distributed among a plurality of servers, hosts or nodes.

It should also be understood that the distribution of work between core network operations and RAN node operations may vary depending on implementation. A 5G or 6G network architecture, for example, may be based on a so-called CU-DU split. One gNB-CU (a CU) may control one or more gNB-DUs (DUs). The gNB-CU may control a plurality of spatially separated gNB-DUs, acting at least as transmit/receive (Tx/Rx) nodes. In some example implementations, however, the gNB-DUs may include, for example, a radio link control (RLC), medium access control (MAC) layer and a physical (PHY) layer, whereas the gNB-CU may include the layers above the RLC layer, such as a packet data convergence protocol (PDCP) layer, a radio resource control (RRC), and an internet protocol (IP) layer. Other functional splits are also possible. It is considered that skilled person is familiar with the open systems interconnection (OSI) model and the functionalities within each layer.

In some example implementations, the server or CU may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU, and the boundary where the responsibility is shifted between the CU and the DU may be selected according to implementation.

3GPP 5G NR currently supports two duplexing modes: frequency-division duplexing (FDD) for paired bands and time-division duplexing (TDD) for unpaired bands. In TDD, UL and DL phases are separated in the time domain. This may create unnecessary latency, possibly reduce coverage and capacity depending on the considered layout. In current TDD deployments, the situation is further exacerbated by the fact that the scheduling offers lower dynamism, i.e., the slot structure is fixed and does not change very often in practice. This may result in rather limited time duration for the uplink in TDD.

Motivated by this, 3GPP has initiated a study and confirmed work item on the evolution of duplexing operation in NR that addresses the challenges above. One of the objectives is to allow the RAN node 202 to do simultaneous DL transmission and UL reception on different physical resource blocks (PRBs)/sub-bands within an unpaired wideband NR cell. This may be referred to as sub-band non-overlapping full duplex (SBFD). In other sources, this duplexing scheme is also referred to as cross-division duplexing (xDD) scheme or flexible duplexing (FDU).

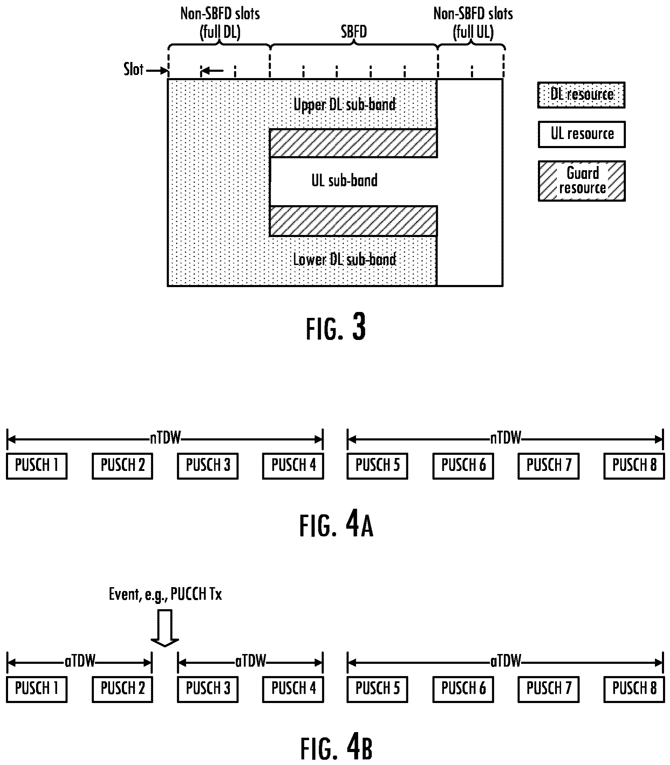

FIG. 3 illustrates a SBFD deployment. As shown, the SBFD deployment includes two slot types for both DL and UL transmissions, namely SBFD slots and non-SBFD slots. In the SBFD slots, non-overlapping DL sub-band(s) and UL sub-band(s) both exist, while in non-SBFD slots, the entire band is used for either DL or UL (i.e., legacy/full DL/UL slots). In SBFD slots, a guard-band is expected to be placed between DL and UL resource blocks (RBs). This provides better isolation between UL and DL transmissions and is expected to be essential for reducing the impact of the self-interference (due to the RAN node's own DL transmissions and the RAN node's own UL reception) as well as cross-link interference (CLI) between UE to UE links, and RAN node to RAN node links.

In 3GPP 5G NR, demodulation - reference signal (DM-RS) is a signal used for channel estimation to enable accurate demodulation of data transmissions carried by physical channels, such as physical downlink shared channel (PDSCH), physical uplink shared channel (PUSCH), physical downlink control channel (PDCCH), physical uplink control channel (PUCCH), physical broadcast channel (PBCH), and the like. In this regard, DM-RS may be transmitted alongside an uplink (UL) or downlink (DL) transmission, and the DM-RS may be used by a receiver (e.g., UE **110,** RAN node **202**) to estimate the channel over which the UL/DL transmission is transmitted, compensating for effects such as fading, interference and the like.

3GPP Release 17 introduced DM-RS bundling as a coverage enhancement feature which allows joint channel estimation across PUSCH/PUCCH transmissions and/or across time slots. One implementation of the DM-RS bundling to improve channel estimation accuracy is to process DM-RS symbols in multiple time slots at the receiver. For this purpose, the transmitter needs to send the same or coherent DM-RS symbols in multiple time slots. This may be carried out by transmitting repetitions of the PUSCH/PUCCH transmissions including DM-RS symbols in the multiple time slots, e.g., one repetition per time slot. In this regard, DM-RS bundling may be used to allow a RAN node **202** to jointly process DM-RS symbols from multiple PUSCH/PUCCH transmissions in order to improve uplink channel estimation performance. In the case of DM-RS bundling, the UE **110** may ensure power consistency and phase continuity across DM-RS symbols to be used by the RAN node for joint channel estimation. To align the understanding between the UE and the RAN node on which the DM-RS symbols are bundled, a time domain window (TDW) may be used to define the duration for which the UE is to maintain power consistency and phase continuity across the DM-RS symbols transmitted on PUSCH/PUCCH.

The TDW determination may include two steps. As shown in FIG. 4, as a first step, a UE **110** may be configured by the RAN **108** (RAN node **202**) with a time duration (e.g., *pusch-TimeDomainWindowLength*) which may be used by the UE to determine consecutive nominal TDW (nTDW), one after another. The nTDW may cover an entire PUSCH transmission including multiple repetitions (repeated transmission of a transport block within a slot multiple times across a number of slots), transport blocks over multiple slots, or PUCCH repetition. The time duration configured by the RAN may therefore be expressed as a nominal window of length L, starting from the first slot of a PUSCH/PUCCH transmission. The nTDW may be repeated across the entire PUSCH/PUCCH transmission.

As a second step, the UE **110** and RAN node **202** may determine one or more actual TDWs (aTDW) in each nTDW, as shown in FIG. 4B. The rationale for this step is that although multiple nTDW covers the entire duration of PUSCH transmission or PUCCH repetition, there are some events that can occur and break the power consistency and phase continuity within each nTDW. Thus, if such an event occurs, nTDW may be partitioned into several aTDW, and UE may only need to maintain power consistency and phase continuity within each aTDW. Examples of events that can occur and break the power consistency and phase continuity include another UL transmission (Tx), DL monitoring, frequency hopping (FH), and the like.

In case of inter-slot FH and when DM-RS bundling (e.g., *pusch-DMRS-Bundling*) is enabled, the starting RB during a slot may be calculated according to a FH pattern that alternates between a first starting RB and a second starting RB every number of slots in a FH interval. In the FH pattern, in some examples, the first starting RB is a starting RB within a UL active BWP, and the second starting RB is determined based on the first starting RB and a FH RB offset.

More particularly, for example, the starting RB during a slot ${n}_{s}^{μ}$ may be given by the following FH pattern: ${RB}_{start} \left({n}_{s}^{μ}\right) = \left\{\begin{matrix}{RB}_{start} & \left⌊\frac{{n}_{s}^{μ}}{{N}_{FH}}\right⌋ mod 2 = 0 \\ \left({RB}_{start}+{RB}_{offset}\right) {modN}_{BWP}^{size} & \left⌊\frac{{n}_{s}^{μ}}{{N}_{FH}}\right⌋ mod 2 = 1\end{matrix}\right.$ (1) In formula (1), ${n}_{s}^{μ}$ is the current slot number within a radio frame, *N_{FH}* indicates the FH interval (e.g., *pusch-FrequencyHopping-Interval*), RBₛₜₐᵣₜ is the starting RB within the UL active BWP, and RB_{offset} is the frequency RB offset in RBs between the two frequency hops. Also in formula (1), ${N}_{BWP}^{size}$ is the size of the UL active BWP in PRBs.

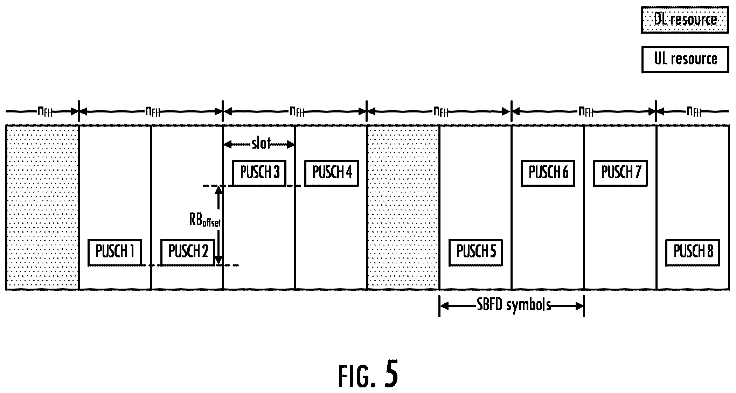

FIG. 5 illustrates inter-slot FH when DM-RS bundling is enabled in TDD. FIG. 5 considers a DUUUUDUUUU TDD pattern of DL (D) and UL (U) slots. The FH pattern shown above in formula (1) allows PUSCH/PUCCH transmissions within a FH interval being kept in the same frequency location, thereby allowing DM-RS bundling across the PUSCH/PUCCH transmissions.

In the context of a SBFD deployment, in the case of inter-slot FH in SBFD symbols and when DM-RS bundling (e.g., *pusch-DMRS-Bundling*) is enabled, the starting RB during a slot may be calculated according to another FH pattern that alternates between a first starting RB and a second starting RB every number of slots in a FH interval. In this other FH pattern, in some examples, the first starting RB is a starting RB with reference to a start of an uplink active BWP after applying an RB offset between non-SBFD symbols and SBFD symbols, and the second starting RB is determined based on the first starting RB and a FH RB offset in SBFD symbols.

More particularly, for example, for inter-slot FH in SBFD symbols and when DM-RS bundling (e.g., *pusch-DMRS-Bundling*) is enabled, the starting RB during a slot ${n}_{s}^{μ}$ may be given by the following FH pattern: $\begin{matrix}{RB}_{start} \left({n}_{s}^{μ}\right) = \\ \left\{\begin{matrix}{RB}_{start} , \left⌊\frac{{n}_{s}^{μ}}{{n}_{FH}}\right⌋ mod 2 = 0 \\ {RB}_{UL SB start} + \left({RB}_{start}-{RB}_{UL SB start}+{RB}_{offset}\right) {modN}_{UL SB}^{size} , \left⌊\frac{{n}_{s}^{μ}}{{n}_{FH}}\right⌋ mod 2 = 1\end{matrix}\right.\end{matrix}$ (2) In formula (2), RB_{UL SB start} is the starting RB (e.g., PRB index) of UL usable PRBs with reference to the start of the UL active BWP, and ${N}_{UL SB}^{size}$ is the number of UL usable PRBs in the UL active BWP. Also in formula (2), RBₛₜₐᵣₜ is the starting RB (e.g., PRB index) with reference to the start of the UL active BWP ( ${RB}_{start}^{non - SBFD}$) after applying an RB offset ( ${RB}_{offset}^{SBFD}$) between non-SBFD symbols and SBFD symbols, and RB_{offset} is the frequency RB offset in in SBFD symbols. Here, the UE **110** may be configured with a SBFD configuration 2 (e.g., *sbfd-Configuration2-Transmission*) that includes the RB offset between non-SBFD symbols and SBFD symbols (e.g., *sbfd-Configuration2-PUSCH-RBOffset*).

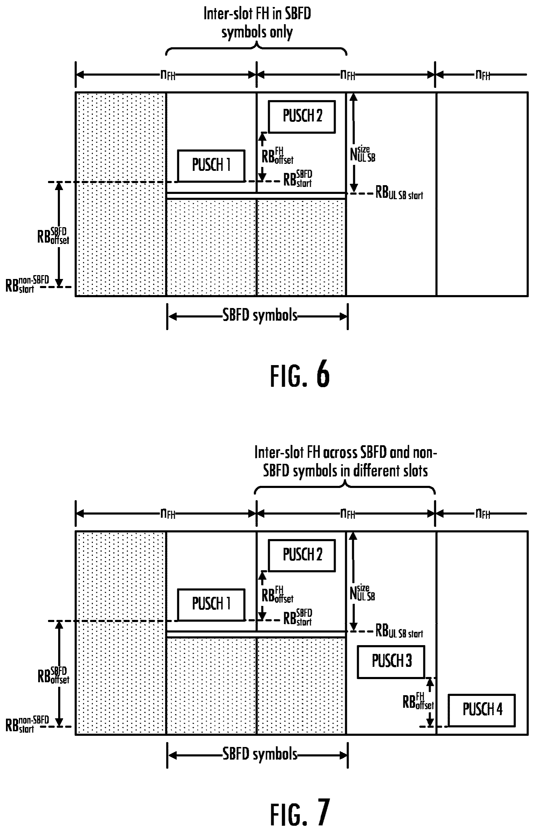

As shown in FIG. 6, the formula (2) addresses the inter-slot FH in SBFD symbols, i.e., inter-slot FH between the slots in SBFD symbols. Given the ${RB}_{start}^{non - SBFD}$ and ${RB}_{offset}^{SBFD}$, the UE **110** (and RAN node **202**) may calculate the ${RB}_{start}^{SBFD}$*,* and alternate between a first starting RB ${RB}_{start}^{SBFD}$ or a second starting RB offset from the first starting RB by ${RB}_{offset}^{FH}$*.* The formula (2) however, only addresses the inter-slot FH in SBFD symbols, and leaves the inter-slot FH across SBFD symbol and non-SBFD symbols in different slots undefined. In view of the foregoing, example implementations of the present disclosure provide solution(s) in which the inter-slot FH across SBFD symbol and non-SBFD symbols in different slots is defined and thereby enabled.

According to some example implementations, a UE **110** may determine transmission occasions in at least a first slot and a subsequent, second slot for a UL transmission toward a network such as a RAN **108** (RAN node **202**). The UL transmission may be a PUSCH transmission or a PUCCH transmission. The transmission occasions have inter-slot FH enabled, and the inter-slot FH includes inter-slot FH across SBFD symbols in the first slot and non-SBFD symbols in the second slot. The UE may calculate a starting RB for the transmission occasions during the at least the first slot and the second slot. In this regard, the UE may calculate the starting RB for the transmission occasion during the first slot according to a first FH pattern, such as when the transmission occasion during the first slot is in SBFD symbols. The UE may calculate the starting RB for the transmission occasion during the second slot according to a second FH pattern different from the first FH pattern, such as when the transmission occasion during the second slot is in non-SBFD symbols. The UE may then transmit the UL transmission toward the network in the at least the first slot and the second slot starting at the starting RB for each slot of the at least the first slot and the second slot.

In some example implementations, a RAN node **202** may determine transmission occasions in at least a first slot and a subsequent, second slot for a UL transmission (e.g., PUSCH/PUCCH transmission) from a UE **110.** As before, the transmission occasions have inter-slot FH enabled, and the inter-slot FH includes inter-slot FH across SBFD symbols in the first slot and non-SBFD symbols in the second slot. The RAN node may calculate a starting RB for the transmission occasions during the at least the first slot and the second slot. In this regard, the RAN node may calculate the starting RB for the transmission occasion during the first slot according to a first FH pattern, such as when the transmission occasion during the first slot is in SBFD symbols. The RAN node may calculate the starting RB for the transmission occasion during the second slot according to a second FH pattern different from the first FH pattern, such as when the transmission occasion during the second slot is in non-SBFD symbols. The RAN node may then receive the UL transmission from the UE in the at least the first slot and the second slot starting at the starting RB for each slot of the at least the first slot and the second slot.

In some examples, the starting RB is calculated based on that the transmission occasion has DM-RS bundling enabled. And in some of these examples, the transmission occasions are the repetitions of the UL transmission across the slots, and each of the transmission occasions includes at least one DM-RS symbol. In other words, there may be a repetition of the UL transmission in each of the slots.

In some examples, the first FH pattern alternates between a first starting RB and a second starting RB every number of slots in a FH interval. In some of these examples, the first starting RB may be a starting RB with reference to a start of an UL active BWP after applying an RB offset between non-SBFD symbols and SBFD symbols, and the second starting RB may be determined based on the first starting RB and a FH RB offset in SBFD symbols. Similarly, in some examples, the second FH pattern may alternate between a first starting RB and a second starting RB every number of slots in a FH interval; and the first starting RB may be a starting RB within an UL active BWP, and the second starting RB may be determined based on the first starting RB and a FH RB offset.

In some more particular examples, the first FH pattern may be as given above in formula (2) for inter-slot FH in SBFD symbols and when DM-RS bundling is enabled, and the second FH pattern may be as given above in formula (1) for inter-slot FH and when DM-RS bundling is enabled. In some of these more particular examples, for inter-slot FH across SBFD and non-SBFD symbols in different slots and when DM-RS bundling is enabled, if the transmission in a slot is in SBFD symbols, the starting RB during the slot may be given by formula (2). If the transmission in the slot is otherwise in non-SBFD symbols, the starting RB during the slot may be given by formula (1). This is shown in FIG. 7 which illustrates inter-slot FH across SBFD symbols and non-SBFD symbols in different slots, according to some example implementations. In other words, the FH is implemented such that the used RBs change from one SBFD symbol to a subsequent non-SBFD symbol. Additionally, the FH may be implemented across SBFD symbols (PUSCH1 and PUSCH2) and/or across non-SBFD symbols (PUSCH3 and PUSCH4), as illustrated in FIG. 7.

In some example implementations, for inter-slot FH across the SBFD symbols in the first slot and the non-SBFD symbols in the second slot, the starting RB for the second slot may be set equal to the starting RB for the first slot if the second slot is in a FH interval that includes the second slot. More particularly, for example, for inter-slot FH across SBFD and non-SBFD symbols in different slots and when DM-RS bundling is enabled, if a slot ${n}_{s}^{μ}$ is in the same FH interval (*n_{FH}*) with an immediately preceding slot ${n}_{s}^{μ} - 1$, the starting RB during slot ${n}_{s}^{μ}$ may be given by ${RB}_{start} \left({n}_{s}^{μ}\right) = {RB}_{start} \left({n}_{s}^{μ}-1\right)$.

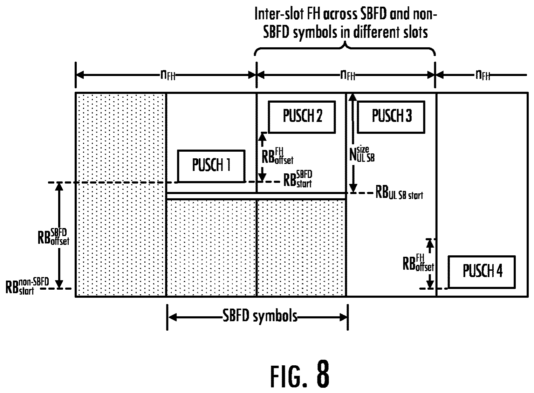

In some of the above example implementations, if the slot is not in the same FH interval with the immediately preceding slot, and the transmission in a slot is in SBFD symbols, the starting RB during the slot may be given by formula (2). And if the transmission in the slot is otherwise in non-SBFD symbols, the starting RB during the slot may be given by formula (1). This is shown in FIG. 8 which illustrates inter-slot FH across SBFD symbols and non-SBFD symbols in different slots, according to some other example implementations.

In some examples, the transmission occasions may further include a transmission occasion spanning across SBFD and non-SBFD symbols in a slot. In some of these examples, the starting RB for the transmission occasion during the slot may be calculated in a number of different manners. For example, calculate the starting RB for the transmission occasion during the slot may be calculated according to the first FH pattern when the transmission occasion during the slot starts in a SBFD symbol of the SBFD symbols in the slot; and otherwise, the starting RB may be calculated according to the second FH pattern when the transmission occasion during the slot starts in a non-SBFD symbol of the non-SBFD symbols in the slot.

In another example in which a transmission occasion spans across SBFD and non-SBFD symbols in a slot, the starting RB for the transmission occasion during the slot may be calculated according to the first FH pattern when a majority of symbols of the transmission occasion during the slot are the SBFD symbols in the slot; and otherwise, the starting RB may be calculated according to the second FH pattern when the majority of the symbols of the transmission occasion during the slot are the non-SBFD symbols in the slot.

In yet another example in which a transmission occasion spans across SBFD and non-SBFD symbols in a slot, the RAN node **202** may configure the UE **110** with a symbol type configuration (and the UE may receive the configuration). In this example, the starting RB for the transmission occasion during the slot may be calculated according to the first FH pattern when the symbol type configuration indicates SBFD symbols; and otherwise, the starting RB may be calculated according to the second FH pattern when the symbol type configuration indicates non-SBFD symbols.

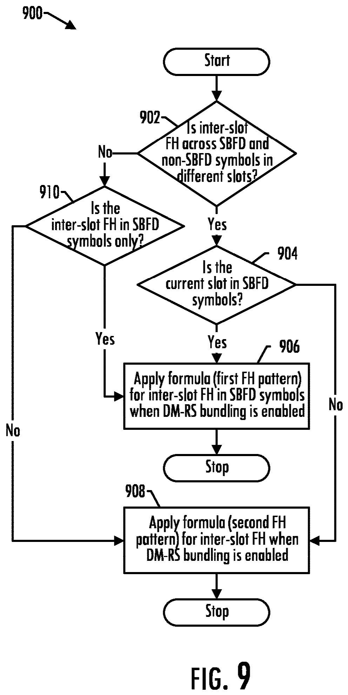

To further illustrate some example implementations, FIG. 9 is a flowchart illustrating various steps in a method **900** of calculating a starting RB for transmission occasions in which inter-slot FH is enabled, and the inter-slot FH includes inter-slot FH across SBFD symbols and non-SBFD symbols. As shown, if the inter-slot FH is across SBFD and non-SBFD symbols in different slots (block **902**), and the current slot is in SBFD symbols (block **904**), the starting RB for the transmission occasion during the current slot may be calculated according to a first FH pattern, such as given above in formula (2) for inter-slot FH in SBFD symbols and when DM-RS bundling is enabled, as shown at block **906.** If the current slot is otherwise in non-SBFD symbols (block **904**), the starting RB for the transmission occasion during the current slot may be calculated according to a second FH pattern, such as given above in formula (1) for inter-slot FH when DM-RS bundling is enabled, as shown at block **908.** Likewise, if the inter-slot FH is in SBFD symbols only (block **910**), the starting RB for the transmission occasion during the current slot may be calculated according to the first FH pattern (block **906**); and otherwise, the starting RB may be calculated according to the second FH pattern (block **908**).

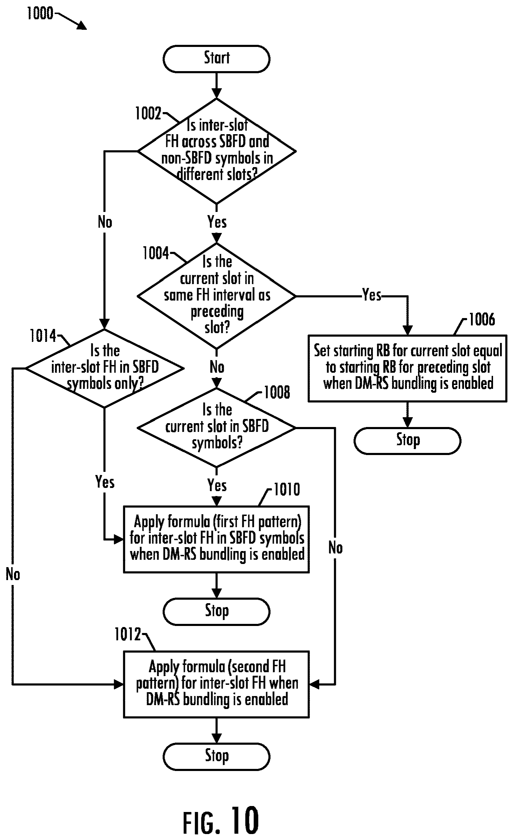

FIG. 10 is a flowchart illustrating various steps in a method **1000** of calculating a starting RB for transmission occasions in which inter-slot FH is enabled, and the inter-slot FH includes inter-slot FH across SBFD symbols and non-SBFD symbols, according to some other example implementations. As shown, if the inter-slot FH is across SBFD and non-SBFD symbols in different slots (block **1002**), and the current slot is in the same FH interval as the immediately preceding slot (block **1004**), the starting RB for the transmission occasion during the current slot may be set equal to the starting RB for the transmission occasion during the immediately preceding slot when DM-RS bundling is enabled, as shown at block **1006**.

If the current slot is not in the same FH interval as the immediately preceding slot (block 1004), and the current slot is in SBFD symbols (block **1008**), the starting RB for the transmission occasion during the current slot may be calculated according to a first FH pattern, such as given above in formula (2) for inter-slot FH in SBFD symbols and when DM-RS bundling is enabled, as shown at block **1010.** If the current slot is otherwise in non-SBFD symbols (block **1008**), the starting RB for the transmission occasion during the current slot may be calculated according to a second FH pattern, such as given above in formula (1) for inter-slot FH when DM-RS bundling is enabled, as shown at block **1012.** Likewise, if the inter-slot FH is in SBFD symbols only (block **1014**), the starting RB for the transmission occasion during the current slot may be calculated according to the first FH pattern (block **1010**); and otherwise, the starting RB may be calculated according to the second FH pattern (block **1012**).

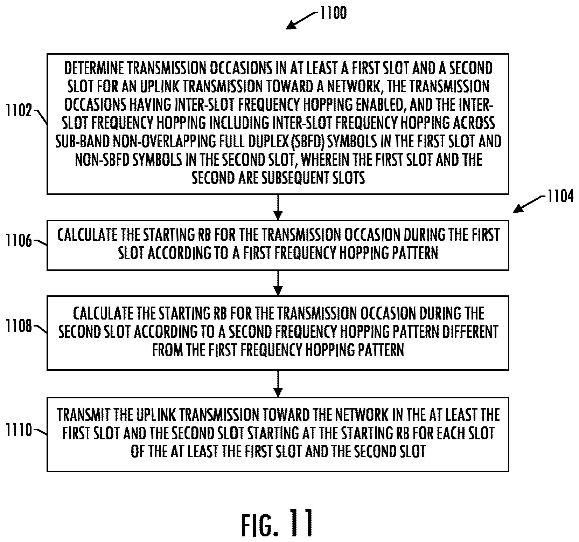

FIG. 11 is a flowchart illustrating various steps in a method **1100** according to various example implementations. The method includes determining transmission occasions in at least a first slot and a second slot for an uplink transmission toward a network, as shown at block **1102.** The transmission occasions have inter-slot frequency hopping enabled, and the inter-slot frequency hopping including inter-slot frequency hopping across sub-band non-overlapping full duplex (SBFD) symbols in the first slot and non-SBFD symbols in the second slot. The first slot and the second are subsequent slots. The method also includes calculating a starting resource block (RB) for the transmission occasions during the at least the first slot and the second slot, as shown at **1104.** In this regard, calculating the starting RB includes calculating the starting RB for the transmission occasion during the first slot according to a first frequency hopping pattern, as shown at block **1106.** Calculating the starting RB also includes calculating the starting RB for the transmission occasion during the second slot according to a second frequency hopping pattern different from the first frequency hopping pattern, as shown at block **1108.** And the method includes transmitting the uplink transmission toward the network in the at least the first slot and the second slot starting at the starting RB for each slot of the at least the first slot and the second slot, as shown at block **1110.**

In some examples, the starting RB is calculated based on that the transmission occasion has demodulation - reference signal (DM-RS) bundling enabled.

In some examples, the transmission occasions are the repetitions of the uplink transmission across the slots, and each of the transmission occasions includes at least one DM-RS symbol.

In some examples, the first frequency hopping pattern alternates between a first starting RB and a second starting RB every number of slots in a frequency hopping interval. In some of these examples, the first starting RB is a starting RB with reference to a start of an uplink active bandwidth part after applying an RB offset between non-SBFD symbols and SBFD symbols. Also in some of these examples, the second starting RB is determined based on the first starting RB and a frequency hopping RB offset in SBFD symbols.

In some examples, the second frequency hopping pattern alternates between a first starting RB and a second starting RB every number of slots in a frequency hopping interval. In some of these examples, the first starting RB is a starting RB within an uplink active bandwidth part. Also in some of these examples, the second starting RB is determined based on the first starting RB and a frequency hopping RB offset.

In some examples, calculating the starting RB at block **1104** further includes, for inter-slot frequency hopping across the SBFD symbols in the first slot and the non-SBFD symbols in the second slot, setting the starting RB for the second slot equal to the starting RB for the first slot if the second slot is in a frequency hopping interval that includes the second slot.

In some examples, the starting RB for the transmission occasion during the first slot is calculated at block **1106** according to the first frequency hopping pattern when the transmission occasion during the first slot is in SBFD symbols. In some of these examples, the starting RB for the transmission occasion during the second slot is calculated at block **1108** according to the second frequency hopping pattern when the transmission occasion during the second slot is in non-SBFD symbols.

In some examples, the transmission occasions further include a transmission occasion spanning across SBFD and non-SBFD symbols in a slot. In some of these examples, calculating the starting RB for the transmission occasions at block **1104** further includes calculating the starting RB for the transmission occasion during the slot according to the first frequency hopping pattern when the transmission occasion during the slot starts in a SBFD symbol of the SBFD symbols in the slot. And otherwise, the starting RB for the transmission occasion during the slot is calculated according to the second frequency hopping pattern when the transmission occasion during the slot starts in a non-SBFD symbol of the non-SBFD symbols in the slot.

In some examples, the transmission occasions further include a transmission occasion spanning across SBFD and non-SBFD symbols in a slot. In some of these examples, calculating the starting RB for the transmission occasions at block **1104** further includes calculating the starting RB for the transmission occasion during the slot according to the first frequency hopping pattern when a majority of symbols of the transmission occasion during the slot are the SBFD symbols in the slot. And otherwise, the starting RB for the transmission occasion during the slot is calculated according to the second frequency hopping pattern when the majority of the symbols of the transmission occasion during the slot are the non-SBFD symbols in the slot.

In some examples, the method **1100** further includes receiving a symbol type configuration from the network. In some of these examples, the transmission occasions further include a transmission occasion spanning across SBFD and non-SBFD symbols in a slot. Also in some of these examples, calculating the starting RB for the transmission occasions at block **1104** further includes calculating the starting RB for the transmission occasion during the slot according to the first frequency hopping pattern when the symbol type configuration indicates SBFD symbols. And otherwise, the starting RB for the transmission occasion during the slot is calculated according to the second frequency hopping pattern when the symbol type configuration indicates non-SBFD symbols.

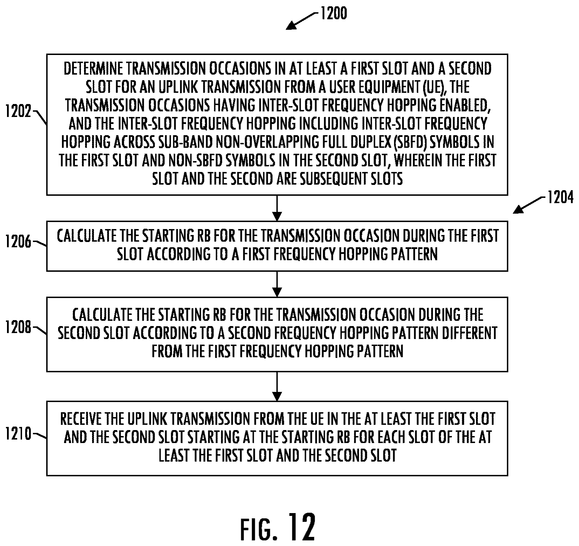

FIG. 12 is a flowchart illustrating various steps in a method **1200** according to various example implementations. The method includes determining transmission occasions in at least a first slot and a second slot for an uplink transmission from a user equipment (UE), as shown at block **1202.** The transmission occasions have inter-slot frequency hopping enabled, and the inter-slot frequency hopping including inter-slot frequency hopping across sub-band non-overlapping full duplex (SBFD) symbols in the first slot and non-SBFD symbols in the second slot. The first slot and the second are subsequent slots. The method also includes calculating a starting resource block (RB) for the transmission occasions during the at least the first slot and the second slot, as shown at **1204.** In this regard, calculating the starting RB includes calculating the starting RB for the transmission occasion during the first slot according to a first frequency hopping pattern, as shown at block **1206.** Calculating the starting RB also includes calculating the starting RB for the transmission occasion during the second slot according to a second frequency hopping pattern different from the first frequency hopping pattern, as shown at block **1208.** And the method includes receiving the uplink transmission from the UE in the at least the first slot and the second slot starting at the starting RB for each slot of the at least the first slot and the second slot, as shown at block **1210.**

In some examples, the starting RB is calculated based on that the transmission occasion has demodulation - reference signal (DM-RS) bundling enabled.

In some examples, the transmission occasions are the repetitions of the uplink transmission across the slots, and each of the transmission occasions includes at least one DM-RS symbol.

In some examples, the first frequency hopping pattern alternates between a first starting RB and a second starting RB every number of slots in a frequency hopping interval. In some of these examples, the first starting RB is a starting RB with reference to a start of an uplink active bandwidth part after applying an RB offset between non-SBFD symbols and SBFD symbols. Also in some of these examples, the second starting RB is determined based on the first starting RB and a frequency hopping RB offset in SBFD symbols.

In some examples, the second frequency hopping pattern alternates between a first starting RB and a second starting RB every number of slots in a frequency hopping interval. In some of these examples, the first starting RB is a starting RB within an uplink active bandwidth part. Also in some of these examples, the second starting RB is determined based on the first starting RB and a frequency hopping RB offset.

In some examples, calculating the starting RB at block **1204** further includes, for inter-slot frequency hopping across the SBFD symbols in the first slot and the non-SBFD symbols in the second slot, setting the starting RB for the second slot equal to the starting RB for the first slot if the second slot is in a frequency hopping interval that includes the second slot.

In some examples, the starting RB for the transmission occasion during the first slot is calculated at block **1206** according to the first frequency hopping pattern when the transmission occasion during the first slot is in SBFD symbols. In some of these examples, the starting RB for the transmission occasion during the second slot is calculated at block **1208** according to the second frequency hopping pattern when the transmission occasion during the second slot is in non-SBFD symbols.

In some examples, the transmission occasions further include a transmission occasion spanning across SBFD and non-SBFD symbols in a slot. In some of these examples, calculating the starting RB for the transmission occasions at block **1204** further includes calculating the starting RB for the transmission occasion during the slot according to the first frequency hopping pattern when the transmission occasion during the slot starts in a SBFD symbol of the SBFD symbols in the slot. And otherwise, the starting RB for the transmission occasion during the slot is calculated according to the second frequency hopping pattern when the transmission occasion during the slot starts in a non-SBFD symbol of the non-SBFD symbols in the slot.

In some examples, the transmission occasions further include a transmission occasion spanning across SBFD and non-SBFD symbols in a slot. In some of these examples, calculating the starting RB for the transmission occasions at block **1204** further includes calculating the starting RB for the transmission occasion during the slot according to the first frequency hopping pattern when a majority of symbols of the transmission occasion during the slot are the SBFD symbols in the slot. And otherwise, the starting RB for the transmission occasion during the slot is calculated according to the second frequency hopping pattern when the majority of the symbols of the transmission occasion during the slot are the non-SBFD symbols in the slot.

In some examples, the method **1200** further includes configuring the UE with a symbol type configuration. In some of these examples, the transmission occasions further include a transmission occasion spanning across SBFD and non-SBFD symbols in a slot. Also in some of these examples, calculating the starting RB for the transmission occasions at block **1204** further includes calculating the starting RB for the transmission occasion during the slot according to the first frequency hopping pattern when the symbol type configuration indicates SBFD symbols. And otherwise, the starting RB for the transmission occasion during the slot is calculated according to the second frequency hopping pattern when the symbol type configuration indicates non-SBFD symbols.

According to example implementations of the present disclosure, a telecommunications system **100** or PLMN **102,** and components thereof such as UE **110, CN 106,** RAN **108** and/or RAN node **202,** may be implemented by various means. Means for implementing the system and its components may include hardware, firmware, software, or combinations thereof. In some examples, one or more apparatuses may be configured to function as or otherwise implement the system and its components shown and described herein. In examples involving more than one apparatus, the respective apparatuses may be connected to or otherwise in communication with one another in a number of different manners, such as directly or indirectly via a wired or wireless network or the like.

According to some example implementations, at least some of the methods **900, 1000** described with respect to FIGS. 9 and 10 may be carried out by apparatus(es) comprising means for performing functions corresponding steps of the respective methods. Similarly, at least some of the methods **1100, 1200** described with respect to FIGS. 11 and 12 may be carried out by apparatus(es) comprising means for performing functions corresponding steps of the respective methods. Examples of a suitable apparatus may include a user equipment, user device, user terminal or the like. Other examples of a suitable apparatus may include a RAN node (e.g., ng-eNB, gNB, gNB-DU, gNB-CU) or any suitable apparatus, such as a server, host or node.

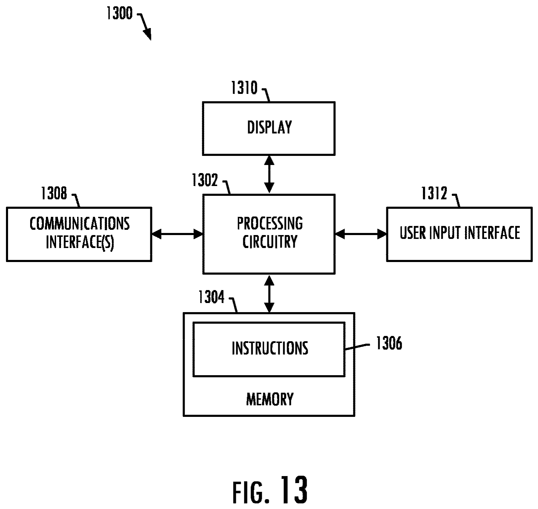

FIG. 13 illustrates an apparatus **1300** in which means for performing various operations includes hardware, alone or under direction of one or more computer programs from a computer-readable storage medium or other memory, such as computer memory, according to some example implementations of the present disclosure. The apparatus may include one or more of each of a number of components such as, for example, processing circuitry **1302** connected to computer-readable storage medium or other memory **1304.**

The processing circuitry **1302** may be composed of one or more processors alone or in combination with one or more computer-readable storage media. The processing circuitry is generally any piece of computer hardware that is capable of processing information such as, for example, data, computer programs, computer code and/or other suitable electronic information. The processing circuitry is composed of a collection of electronic circuits some of which may be packaged as an integrated circuit or multiple interconnected integrated circuits (an integrated circuit at times more commonly referred to as a "chip"). The processing circuitry may be configured to execute computer programs, which may be stored onboard the processing circuitry or otherwise stored in the memory **1304** (of the same or another apparatus).

The processing circuitry **1302** may comprise a number of processors, a multi-core processor or some other type of processor, such as a central processing unit, a graphics processing unit, a tensor processing, unit, or an accelerator, depending on the particular implementation. Further, the processing circuitry may be implemented using a number of heterogeneous processor systems in which a main processor is present with one or more secondary processors on a single chip. As another illustrative example, the processing circuitry may be a symmetric multi-processor system containing multiple processors of the same type. In yet another example, the processing circuitry may be embodied as or otherwise include one or more application specific integrated circuits (ASICs), field programmable gate arrays (FPGAs) or the like. Thus, although the processing circuitry may be capable of executing a computer program to perform one or more functions, the processing circuitry of various examples may be capable of performing one or more functions without the aid of a computer program. In either instance, the processing circuitry may be appropriately programmed to perform functions or operations according to example implementations of the present disclosure.

The memory **1304** is generally any piece of computer hardware that is capable of storing information such as, for example, data, computer programs, instructions **1306** (e.g., computer-readable program code) and/or other suitable information either on a temporary basis and/or a permanent basis. The memory may include volatile and/or non-volatile memory, and may be fixed or removable. Examples of suitable memory include recording media, random access memory (RAM), read-only memory (ROM), a hard drive, a flash memory, a thumb drive, a removable computer diskette, an optical disk or some combination thereof.

The memory **1304** is a non-transitory device capable of storing information. One example of a suitable memory is a computer-readable storage medium, which is distinguishable from a computer-readable transmission medium capable of carrying information from one location to another. Examples of suitable computer-readable transmission media comprise electronic carrier signals, telecommunications signals, or some combination thereof. As used herein, the term "non-transitory" is a limitation of the medium itself (i.e., tangible, not a signal) as opposed to a limitation on data storage persistency (e.g., RAM versus ROM). A computer-readable medium as described herein generally refers to a computer-readable storage medium or computer-readable transmission medium. A computer-readable medium is any entity or device capable in which information, such as one or more computer programs or portions thereof, may be stored and carried.

In addition to the memory **1304** (e.g., computer-readable storage medium), the processing circuitry **1302** may also be connected to one or more interfaces for displaying, transmitting and/or receiving information. The interfaces may include a communications interface **1308** and/or one or more user interfaces. The communications interface may be configured to transmit and/or receive information, such as to and/or from other apparatus(es), network(s) or the like. The communications interface may be configured to transmit and/or receive information by physical (wired) and/or wireless communications links. Examples of suitable communication interfaces include a network interface controller (NIC), wireless NIC (WNIC) or the like.

The user interfaces may include a display **1310** and/or one or more user input interfaces **1312.** The display may be configured to present or otherwise display information to a user, suitable examples of which include a liquid crystal display (LCD), light-emitting diode (LED) display, organic LED (OLED) display, active-matrix OLED (AMOLED) or the like. The user input interfaces may be wired or wireless, and may be configured to receive information from a user into the apparatus, such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces may further include one or more interfaces for communicating with peripherals such as printers, scanners or the like.

Execution of the instructions **1306** by the processing circuitry **1302,** or storage of the instructions in the memory **1304,** supports combinations of operations for implementing example implementations of the present disclosure. In this manner, an apparatus **1300** may comprise at least one processing circuitry and at least one memory coupled to the at least one processing circuitry, where the at least one processing circuitry is configured to execute instructions stored in the at least one memory. It will also be understood that one or more functions, and combinations of functions, may be implemented by special purpose hardware-based computer systems and/or processing circuitry which perform the specified functions, or combinations of special purpose hardware and program code instructions.

Some example implementations of the present disclosure may also be carried out in the form of a computer process defined by one or more computer programs or portions thereof. Example implementations of the present disclosure may be carried out by executing at least one portion of a computer program comprising instructions. The computer program may be in source code form, object code form, or in some intermediate form. The computer program may be stored in a computer-readable medium that is readable by a computer, processing circuitry or other suitable apparatus. As indicated above, for example, the computer program may be stored in a memory, such as a computer-readable storage medium. Additionally or alternatively, for example, the computer program may be stored in a computer-readable transmission medium. The coding of software for carrying out example implementations of the present disclosure is well within the scope of a person of ordinary skill in the art.

As will be appreciated, any suitable instructions may be loaded onto a computer, a processor, a processing circuitry or other programmable apparatus from a memory or a computer-readable medium (e.g., computer-readable storage medium, computer-readable transmission medium) to produce a particular machine, such that the particular machine becomes a means for implementing the functions specified herein. The instructions may also be stored in a computer-readable medium that can direct a computer, a processor, a processing circuitry or other programmable apparatus to function in a particular manner to thereby generate a particular machine or particular article of manufacture. In some examples, the instructions stored in the computer-readable medium may produce an article of manufacture, where the article of manufacture becomes a means for implementing functions described herein. The instructions may be retrieved from a computer-readable medium and loaded into a computer, processor, processing circuitry or other programmable apparatus to configure the computer, processor, processing circuitry or other programmable apparatus to execute operations to be performed on or by the computer, processor, processing circuitry or other programmable apparatus.

Retrieval, loading and execution of instructions comprising program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processor, processing circuitry or other programmable apparatus provide operations for implementing functions described herein.

Many modifications and other implementations of the disclosure set forth herein will come to mind to one skilled in the art to which the disclosure pertains having the benefit of the teachings presented in the foregoing description and the associated figures. Therefore, it is to be understood that the disclosure is not to be limited to the specific implementations disclosed and that modifications and other implementations are intended to be included within the scope of the appended claims. Moreover, although the foregoing description and the associated figures describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising:
at least one memory configured to store instructions; and
at least one processing circuitry configured to access the at least one memory, and execute the instructions to cause the apparatus to at least:
determine transmission occasions in at least a first slot and a second slot for an uplink transmission toward a network, the transmission occasions having inter-slot frequency hopping enabled, and the inter-slot frequency hopping including inter-slot frequency hopping across sub-band non-overlapping full duplex, SBFD, symbols in the first slot and non-SBFD symbols in the second slot, wherein the first slot and the second are subsequent slots;
calculate a starting resource block, RB, for the transmission occasions during the at least the first slot and the second slot, calculating the starting RB including:
calculate the starting RB for the transmission occasion during the first slot according to a first frequency hopping pattern; and
calculate the starting RB for the transmission occasion during the second slot according to a second frequency hopping pattern different from the first frequency hopping pattern; and
transmit the uplink transmission toward the network in the at least the first slot and the second slot starting at the starting RB for each slot of the at least the first slot and the second slot.

2. The apparatus of claim 1, wherein the starting RB is calculated based on that the transmission occasion has demodulation - reference signal, DM-RS, bundling enabled.

3. The apparatus of claim 2, wherein the transmission occasions are the repetitions of the uplink transmission across the slots, and each of the transmission occasions includes at least one DM-RS symbol.

4. The apparatus of any of claims 1 to 3, wherein the first frequency hopping pattern alternates between a first starting RB and a second starting RB every number of slots in a frequency hopping interval, and
wherein the first starting RB is a starting RB with reference to a start of an uplink active bandwidth part after applying an RB offset between non-SBFD symbols and SBFD symbols, and the second starting RB is determined based on the first starting RB and a frequency hopping RB offset in SBFD symbols.

5. The apparatus of any of claims 1 to 4, wherein the second frequency hopping pattern alternates between a first starting RB and a second starting RB every number of slots in a frequency hopping interval, and
wherein the first starting RB is a starting RB within an uplink active bandwidth part, and the second starting RB is determined based on the first starting RB and a frequency hopping RB offset.

6. The apparatus of any of claims 1 to 5, wherein the apparatus caused to calculate the starting RB further includes the apparatus caused to, for inter-slot frequency hopping across the SBFD symbols in the first slot and the non-SBFD symbols in the second slot, set the starting RB for the second slot equal to the starting RB for the first slot if the second slot is in a frequency hopping interval that includes the second slot.

7. The apparatus of any of claims 1 to 6, wherein the starting RB for the transmission occasion during the first slot is calculated according to the first frequency hopping pattern when the transmission occasion during the first slot is in SBFD symbols and,
wherein the starting RB for the transmission occasion during the second slot is calculated according to the second frequency hopping pattern when the transmission occasion during the second slot is in non-SBFD symbols.

8. The apparatus of any of claims 1 to 7, wherein the transmission occasions further include a transmission occasion spanning across SBFD and non-SBFD symbols in a slot, and the apparatus caused to calculate the starting RB for the transmission occasions further includes the apparatus caused to:
calculate the starting RB for the transmission occasion during the slot according to the first frequency hopping pattern when the transmission occasion during the slot starts in a SBFD symbol of the SBFD symbols in the slot; and otherwise,
calculate the starting RB for the transmission occasion during the slot according to the second frequency hopping pattern when the transmission occasion during the slot starts in a non-SBFD symbol of the non-SBFD symbols in the slot.

9. The apparatus of any of claims 1 to 8, wherein the transmission occasions further include a transmission occasion spanning across SBFD and non-SBFD symbols in a slot, and the apparatus caused to calculate the starting RB for the transmission occasions further includes the apparatus caused to:
calculate the starting RB for the transmission occasion during the slot according to the first frequency hopping pattern when a majority of symbols of the transmission occasion during the slot are the SBFD symbols in the slot; and otherwise,
calculate the starting RB for the transmission occasion during the slot according to the second frequency hopping pattern when the majority of the symbols of the transmission occasion during the slot are the non-SBFD symbols in the slot.

10. The apparatus of any of claims 1 to 9, wherein the at least one processing circuitry is configured to execute the instructions to cause the apparatus to further receive a symbol type configuration from the network, and
wherein the transmission occasions further include a transmission occasion spanning across SBFD and non-SBFD symbols in a slot, and the apparatus caused to calculate the starting RB for the transmission occasions further includes the apparatus caused to:
calculate the starting RB for the transmission occasion during the slot according to the first frequency hopping pattern when the symbol type configuration indicates SBFD symbols; and otherwise,
calculate the starting RB for the transmission occasion during the slot according to the second frequency hopping pattern when the symbol type configuration indicates non-SBFD symbols.

11. A method comprising:
determining transmission occasions in at least a first slot and a second slot for an uplink transmission toward a network, the transmission occasions having inter-slot frequency hopping enabled, and the inter-slot frequency hopping including inter-slot frequency hopping across sub-band non-overlapping full duplex, SBFD, symbols in the first slot and non-SBFD symbols in the second slot, wherein the first slot and the second are subsequent slots;
calculating a starting resource block, RB, for the transmission occasions during the at least the first slot and the second slot, calculating the starting RB including:
calculating the starting RB for the transmission occasion during the first slot according to a first frequency hopping pattern; and
calculating the starting RB for the transmission occasion during the second slot according to a second frequency hopping pattern different from the first frequency hopping pattern; and
transmitting the uplink transmission toward the network in the at least the first slot and the second slot starting at the starting RB for each slot of the at least the first slot and the second slot.

12. An apparatus comprising:
at least one memory configured to store instructions; and
at least one processing circuitry configured to access the at least one memory, and execute the instructions to cause the apparatus to at least:
determine transmission occasions in at least a first slot and a second slot for an uplink transmission from a user equipment, UE, the transmission occasions having inter-slot frequency hopping enabled, and the inter-slot frequency hopping including inter-slot frequency hopping across sub-band non-overlapping full duplex, SBFD, symbols in the first slot and non-SBFD symbols in the second slot, wherein the first slot and the second are subsequent slots;
calculate a starting resource block, RB, for the transmission occasions during the at least the first slot and the second slot, calculating the starting RB including:
calculate the starting RB for the transmission occasion during the first slot according to a first frequency hopping pattern; and
calculate the starting RB for the transmission occasion during the second slot according to a second frequency hopping pattern different from the first frequency hopping pattern; and
receive the uplink transmission from the UE in the at least the first slot and the second slot starting at the starting RB for each slot of the at least the first slot and the second slot.

13. The apparatus of claim 12, wherein the starting RB is calculated based on that the transmission occasion has demodulation - reference signal, DM-RS, bundling enabled.

14. The apparatus of claim 13, wherein the transmission occasions are the repetitions of the uplink transmission across the slots, and each of the transmission occasions includes at least one DM-RS symbol.

15. The apparatus of any of claims 12 to 14, wherein the first frequency hopping pattern alternates between a first starting RB and a second starting RB every number of slots in a frequency hopping interval, and
wherein the first starting RB is a starting RB with reference to a start of an uplink active bandwidth part after applying an RB offset between non-SBFD symbols and SBFD symbols, and the second starting RB is determined based on the first starting RB and a frequency hopping RB offset in SBFD symbols.
